# EUROPÄISCHE PATENTSCHRIFT

(11) **EP 2 342 110 B1**
(45) Veröffentlichungstag und Bekanntmachung des Hinweises auf die Patenterteilung: **14.11.2012**
(21) Anmeldenummer: 09783217.4
(22) Anmeldetag: 21.09.2009
(51) Int. Cl.: B60T 13/58, B60T 13/74

(54) **KOMBINIERTE FAHRZEUGBREMSANLAGE MIT HYDRAULISCH UND ELEKTROMECHANISCH BETÄTIGBAREN RADBREMSEN**
COMBINED VEHICLE BRAKE SYSTEM WITH HYDRAULICALLY AND ELECTROMECHANICALLY ACTUATABLE WHEEL BRAKES
SYSTÈME DE FREINAGE COMBINÉ D'UN VÉHICULE, AVEC FREINS DE ROUE ACTIONNÉS HYDRAULIQUEMENT ET ÉLECTROMÉCANIQUEMENT

(30) Priorität: 27.09.2008 DE 102008049218; 16.09.2009 DE 102009041449
(43) Veröffentlichungstag der Anmeldung: 13.07.2011
(73) Patentinhaber: Continental Teves AG & Co. oHG, 60488 Frankfurt (DE)
(72) Erfinder: LINHOFF, Paul, 61267 Neu-Anspach (DE); HEISE, Andreas, 64390 Erzhausen (DE)
(86) Internationale Anmeldenummer: PCT/EP2009/062166
(87) Internationale Veröffentlichungsnummer: WO 2010/034676

(56) Entgegenhaltungen:
- WO-A-2005/061294
- DE-A1- 10 010 735
- DE-B3- 10 319 194
- DE-U1- 20 319 903

## Beschreibung

Die Erfindung betrifft eine kombinierte hydraulische und elektromechanische Fahrzeugbremsanlage gemäß Oberbegriff von Anspruch 1. Die Fahrzeugbremsanlage ist zur Verwendung in Kraftfahrzeugen, insbesondere in Kraftwagen, vorgesehen.

Es sind elektromechanische Bremsen bekannt, Siehe z.B. WO2005/061294 A1, denen die Radbremsen direkt auf elektromechanischem Wege, beispielsweise mittels eines Elektromotors, betätigbar sind. So ist in der DE 196 15 186 Cl ein Bremssystem beschrieben, bei dem jeder Radbremse ein Elektromotor mit einem Läufer zugeordnet ist. Bei einer Ansteuerung des Elektromotors wird die Rotationsbewegung des Läufers mit Hilfe einer Spindel in eine Translationsbewegung umgewandelt. Durch eine mechanische Übersetzung in Gestalt eines Hebelmechanismus wird die Axialkraft vervielfacht und auf einen Kolben übertragen, der einen Bremsbelag an eine Bremsscheibe andrückt und ein Bremsmoment erzeugt. Es ist vorgesehen, alle (vier) Räder eines Fahrzeugs mit einer derartigen elektromechanischen Radbremse auszustatten. Nachteilig bei derartigen voll elektromechanischen Bremssystemen ist es, dass für eine Sicherstellung der notwendigen Redundanz, insbesondere der Notfallenergieversorgung, das übliche Fahrzeugbordnetz nicht ausreicht und zwei zusätzliche, nur für das Bremssystem vorgesehene Zusatzakkumulatoren notwendig sind. Darüber hinaus ist für eine sichere Energieversorgung auch eine Erhöhung der Spannung dieser Akkumulatoren (gegenüber der üblichen Bordnetzspannung von 12 V) auf Spannungen von bei-spielsweise 36 V oder 42 V, erforderlich. Nur so kann eine ausreichende Energiemenge für die Elektromotoren rasch und sicher bereitgestellt werden.

Weiterhin sind elektrohydraulische Bremssysteme bekannt, bei welchen die Radbremse mit dem hydraulischen Druck aus einer fremdbetätigbaren Druckquelle beaufschlagt wird. Derartige Bremssysteme benötigen in der Regel aufwändige hydraulische Komponenten, z.B. einen Hochdruckspeicher, und umfassen für zusätzliche Bremskomponenten für den Fall eines Ausfalls der elektrohydraulischen Bremse (Rückfallebene). So ist z.B. aus der DE 100 10 735 A1 ein Bremssystem mit einer elektrohydraulischen Bremse an der Vorderachse und einer elektromechanischen Bremse an der Hinterachse bekannt. Im Normalbetrieb wird die elektrohydraulische Bremse mit dem hydraulischen Druck aus einer fremdbetätigbarer Druckquelle beaufschlagt. Als fremdbetätigbare Druckquelle wird ein Motor-Pumpen-Aggregat mit einem Hochdruckspeicher eingesetzt. Für den Notfall-Betrieb umfasst das Bremssystem zusätzlich eine weitere, fahrerbetätigbare Druckquelle. Aufgrund der aufwändigen hydraulischen Komponenten sowie der zusätzlichen Komponenten für den Notfall-Betrieb sind elektrohydraulische Bremssysteme recht kostenintensiv.

Weiterhin sind hydraulische Bremssysteme sowie kombinierte Bremssysteme mit einem elektromechanischen Bremssystem für die Hinterachse und einem hydraulischen Bremssystem für die Vorderachse bekannt. So ist z.B. aus der DE 103 19 194 B3 ein Bremssystem bekannt, bei dem an der Vorderachse ein hydraulisches Betriebsbremssystem und an der Hinterachse ein elektromechanisches Betriebsbremssystem eingesetzt wird, wobei bei dem hydraulischen Bremssystem der Vorderachse der Bremsdruck durch einen fahrerbetätigbaren Hauptbremszylinder und einen Unterdruck-Bremskraftverstärker erzeugt wird. Nachteilig bei den oben genannten Bremssystemen ist es, dass die hydraulische Bremse an den Vorderrädern üblicherweise Vakuum-unterstützt ausgeführt sein muss, um einen ausreichenden hydraulischen Bremsdruck zu erreichen. Entsprechend ist bei diesen Systemen zusätzlich ein Vakuumverstärker notwendig, welcher mittels Vakuum von einem Verbrennungsmotor oder einer Vakuumpumpe den hydraulisch vorgegebenen Bremswunsch des Fahrers verstärkt.

Der vorliegenden Erfindung liegt daher die Aufgabe zugrunde, eine alternative Fahrzeugbremsanlage bereitzustellen, welche kostengünstig ist und keinen Bremskraftverstärker und/oder keine Vakuumunterstützung benötigt.

Diese Aufgabe wird erfindungsgemäß durch eine Fahrzeugbremsanlage gemäß Anspruch 1 gelöst.

Der Erfindung liegt der Gedanke zugrunde, die Betriebsbremsanlage für die Vorderachse des Fahrzeugs als elektromechanische Betriebsbremsanlage und die Betriebsbremsanlage für die Hinterachse des Fahrzeugs als eine hydraulische Betriebsbremsanlage auszuführen.

Die Erfindung bietet zum einen den Vorteil, dass die hydraulische Betriebsbremsanlage ohne eine VakuumUnterstützung ausgeführt sein kann, da die Bremskraftanforderung an der Hinterachse im Allgemeinen geringer ist als an der Vorderachse. Zum anderen stellt die Bremsanlage mit elektromechanischen Bremsen lediglich an der Vorderachse des Fahrzeugs Anforderung an die Energieversorgung, welche durch ein übliches Fahrzeugbordnetz erbracht werden können. Somit können bei der erfindungsgemäßen Bremsanlage Kosten durch zusätzliche Akkumulatoren vermieden werden. Ein weiterer Vorteil ist es, dass die Bremsanlage auch bei einem Ausfall des Bordnetzes eine ausreichende Bremsleistung über die Hinterachse erbringen kann.

Bevorzugt handelt es sich bei den elektromechanisch betätigbaren Radbremsen an der Vorderachse um Scheibenbremsen. Elektromechanisch betätigbare Scheibenbremsen sind an sich aus dem Stand der Technik bekannt. Bis auf eventuelle, geringfügige Änderungen stehen entsprechende elektromechanisch betätigbare Scheibenbremsen also bereits zur Verfügung und können daher kostengünstig in einer erfindungsgemäßen Bremsanlage eingesetzt werden. Die mit elektromechanisch betätigbaren Radbremsen an der Vorderachse aufbringbaren Bremskräfte sind insbesondere für nicht zu schwere Fahrzeuge, wie z.B. Elektro-Fahrzeuge, Klein- und Mittelklasse-Pkw, ausreichend.

Es ist auch bevorzugt, die Bremswirkung an der Vorderachse durch die Bremswirkung eines elektrischen Antriebsmotors des Fahrzeugs, welcher im Generatorbetrieb betrieben wird (Rekuperation), zu unterstützen. Dies hat zur Folge, dass die elektromechanisch betätigbaren Scheibenbremsen nicht so groß/stark ausgelegt werden müssen.

Bevorzugt handelt es sich bei den hydraulisch betätigbaren Radbremsen an der Hinterachse um selbstverstärkende Bremsen, z.B. Keilbremsen oder Trommelbremsen, oder überdimensionierte Scheibenbremsen, d.h. Scheibenbremsen mit großem Wirkradius. So wird eine ausreichende Bremswirkung auch ohne Bremskraftverstärkung erzielt. Besonders bevorzugt handelt es sich bei den hydraulisch betätigbaren Radbremsen an der Hinterachse um Trommelbremsen, da Trommelbremsen an sich bereits vielfach eingesetzt werden und folglich technisch ausgereift sind, und bei gleicher Zuspannkraft höhere Bremskräfte erzeugen können als z.B. Scheibenbremsen. Somit ist keine Bremskraftverstärkung, insbesondere kein Vakuum-Bremskaftverstärker, notwendig.

In einer besonders vorteilhaften Weiterbildung des Erfindungsgegenstandes ist es vorgesehen, dass die Fahrzeugbremsanlage eine von einem Fahrzeugführer betätigbare Bremsbetätigungseinrichtung aufweist, welche dem Hauptbremszylinder der hydraulischen Betriebsbremsanlage direkt, ohne einen zwischengeschalteten Bremskraftverstärker, vorgeschaltet ist. Während ungeregelter Bremsungen werden die hydraulisch betätigbaren Radbremsen mit dem hydraulischen Druck beaufschlagt, der vom Fahrer über die Bremsbetätigungseinrichtung und einen ohne zwischengeschalteten Bremskraftverstärker nachgeschalteten Hauptbremszylinder eingebracht wird. Der Verzicht auf einen Bremskraftverstärker führt zu einer Reduzierung der Kosten für die Bremsanlage.

Die Fahrzeugbremsanlage umfasst vorteilhafterweise eine der Hinterachse zugeordnete elektrohydraulische Steuer- und Regeleinheit, welche eine Steuerung der Bremskraft der hydraulisch betätigbaren Radbremsen mittels einer Radbremsdruckregelventilanordnung durchführen kann. Bevorzugt erstellt die elektrohydraulische Steuer- und Regeleinheit zusätzlich Vorgaben zur Steuerung der Bremskraft der elektromechanisch betätigbaren Radbremsen und leitet diese an die elektromechanisch betätigbaren Radbremsen weiter. So kann durch die elektrohydraulische Steuer- und Regeleinheit eine koordinierte Steuerung aller Radbremsen des Fahrzeugs durchgeführt werden. Dies ist besonders vorteilhaft im Falle Schlupf- und/oder Fahrdynamikregelung oder auch bei Ausfall einer oder mehrerer Radbremsen.

Die elektrohydraulische Steuer- und Regeleinheit ist bevorzugt derart ausgeführt, dass sie ohne eine Betätigung der Bremsbetätigungseinrichtung durch den Fahrzeugführer die hydraulisch betätigbaren Radbremsen mit einem hydraulischen Druck beaufschlagen kann oder dass sie einen vom Fahrzeugführer eingesteuerten hydraulischen Druck erhöhen kann. Hierfür umfasst die elektrohydraulische Steuer- und Regeleinheit besonders bevorzugt ein Motor-Pumpen-Aggregat und mindestens ein Ventil zum Druckaufbau in einer der hydraulisch betätigbaren Radbremsen.

Um die Länge der verwendeten Bremsleitungen gering zu halten und damit die Herstellungskosten zu verringern, ist die elektrohydraulische Steuer- und Regeleinheit bevorzugt im hinteren Teil des Fahrzeugs angeordnet. Ebenso ist der Bremsflüssigkeitsbehälter für die elektrohydraulische Steuer- und Regeleinheit vorteilhafterweise bevorzugt im hinteren Teil des Fahrzeugs angeordnet, um so Bauraum im vorderen Bereich des Fahrzeugs einzusparen.

Gemäß einer Weiterbildung der Erfindung weist die hydraulische Betriebsbremsanlage zwei hydraulisch betätigbare Radbremsen auf und ist als eine Einkreis-Bremsanlage mit einem Einkreis-Hauptbremszylinder ausgeführt. Die elektrohydraulische Steuer- und Regeleinheit ist bevorzugt über eine einzige hydraulische Bremsleitung mit dem Einkreis-Hauptbremszylinder verbunden und von der elektrohydraulischen Steuer- und Regeleinheit führt jeweils eine einzige hydraulische Bremsleitung zu jeder der beiden Radbremsen. So können Kosten und Bauraum für Bremsleitungen eingespart werden.

Gemäß einer Weiterbildung der Erfindung weist die hydraulische Betriebsbremsanlage zwei hydraulisch betätigbare Radbremsen auf und ist als eine Zweikreis-Bremsanlage mit einem Tandemhauptbremszylinder ausgeführt. Die elektrohydraulische Steuer- und Regeleinheit ist dabei bevorzugt über zwei hydraulische Bremsleitungen mit den beiden Anschlüssen des Tandemhauptbremszylinders verbunden. Von der elektrohydraulische Steuer- und Regeleinheit führt dann jeweils eine einzige hydraulische Bremsleitung zu jeder der beiden Radbremsen.

Bevorzugt umfasst die elektrohydraulische Steuer- und Regeleinheit mindestens eine Sensorik zur Erfassung einer Gierrate und/oder einer Querbeschleunigung und/oder einer Längsbeschleunigung oder ist mit einer solchen Sensorik verbunden, um eine Schlupf- und/oder Fahrdynamikregelung durchführen zu können. Zusätzlich oder alternativ umfasst die elektrohydraulische Steuer- und Regeleinheit eine Sensorik zur Erfassung eines Feststellbremswunsches oder ist mit einer solchen Sensorik verbunden.

Bevorzugt sind die elektromechanisch betätigbaren Radbremsen nach Maßgabe der an den Radbremsen eingesteuerten Bremsanforderung bzw. daraus abgeleiteter Daten über einen Fahrzeugbus (z.B. CAN) und/oder nach Maßgabe von Ausgangssignalen eines Pedalwegsensors, der den Betätigungsweg eines Bremspedals ermittelt, betätigbar.

Bevorzugt ist jeder der elektromechanisch betätigbaren Radbremsen der Vorderachse jeweils eine elektronische Steuer - und Regeleinheit zugeordnet. Diese ist besonders bevorzugt in die zugehörige Radbremse integriert. Dies stellt eine kompakte Bauweise der elektromechanisch betätigbaren Radbremse sicher.

Jede der elektronischen Steuer- und Regeleinheiten ist bevorzugt über mehr als einen Kommunikationsbus mittelbar oder unmittelbar mit der der Hinterachse zugeordneten elektrohydraulischen Steuer- und Regeleinheit verbunden. Hierdurch kann jede Steuer- und Regeleinheit einer elektromechanisch betätigbaren Radbremse Bremskraftvorgaben von der elektrohydraulischen Steuer- und Regeleinheit erhalten, welche z.B. die Koordination aller Radbremsen durchführt.

Ebenso ist es bevorzugt, dass ein Datenbus zur Kommunikation zwischen den Steuer- und Regeleinheiten der elektromechanisch betätigbaren Radbremsen vorgesehen ist.

Die elektromechanisch betätigbare(n) Radbremse(n) der Vorderachse umfasst/umfassen bevorzugt jeweils eine Feststellbremsvorrichtung, welche mittels eines Parkbrems-Bedienelementes durch den Fahrzeugführer ansteuerbar ist. Zur Kostenersparnis umfasst/umfassen die hydraulisch betätigbare(n) Radbremse(n) der Hinterachse bevorzugt keine Feststellbremsvorrichtung oder Feststellbremsfunktion.

Das Parkbrems-Bedienelement ist vorteilhafterweise unmittelbar an eine elektronische Steuer- und Regeleinheit angeschlossen. Diese leitet den Feststellbremswunsch an alle elektromechanisch betätigbaren Radbremsen mit Feststellbremsvorrichtung weiter. Das Parkbrems-Bedienelement ist z.B. unmittelbar an die elektronische Steuer- und Regeleinheit einer elektromechanisch betätigbaren Radbremse angeschlossen. So kann im Falle eines Ausfalls des Kommunikationsbusses zumindest an dieser elektromechanisch betätigbaren Radbremse eine Feststellbremsung durchgeführt werden.

Gemäß einer Weiterbildung der Erfindung weist die Bremsanlage zumindest an den Vorderrädern jeweils einen Raddrehzahlsensor auf. Die elektronische Steuer- und Regeleinheit jeder elektromechanisch betätigbaren Radbremse ist mit zumindest einem dieser Raddrehzahlsensor unmittelbar verbunden, besonders bevorzugt ist die Steuer- und Regeleinheit mit dem Raddrehzahlsensor des ihr zugeordneten Vorderrads unmittelbar verbunden.

Damit die elektronische Steuer- und Regeleinheit einer elektromechanisch betätigbaren Radbremse auch bei einem Kommunikationsverlust mit der elektrohydraulischen Steuer- und Regeleinheit eigenständig Bremsungen an der elektromechanisch betätigbaren Radbremse durchführen kann, wird der elektronischen Steuer- und Regeleinheit jeder elektromechanisch betätigbaren Radbremse bevorzugt über einen weiteren Weg als der unmittelbaren Kommunikationsbus-Verbindung mit der elektrohydraulischen Steuer- und Regeleinheit mindestens eine Information eines Sensors, welche einen Fahrerbremswunsch wiedergibt, zugeführt. Bei diesem Sensor handelt es sich besonders bevorzugt um einen Weg- oder Winkelsensor zur Erfassung der Betätigung der Bremsbetätigungseinrichtung. Alternativ oder zusätzlich handelt es sich um einen Wegsensor zur Bestimmung eines Kolbenweges in dem Hauptbremszylinder oder um einen Drucksensor zur Bestimmung eines hydraulischen Druckes in dem Hauptzylinder oder in der elektrohydraulischen Steuer- und Regeleinheit.

Bevorzugt ist das Bussystem als Ringleitung ausgeführt, welche die elektronischen Steuer- und Regeleinheiten der elektromechanischen Bremsen und die elektrohydraulische Steuer- und Regeleinheit verbindet.

Die erfindungsgemäße Bremsanlage kommt ohne einen Bremskraftverstärker und/oder ohne eine Vakuumunterstützung aus. Daher wird die Bremsanlage bevorzugt in Elektro- oder Hybrid-Fahrzeugen eingesetzt, in welchen prinzipiell kein Vakuum von einem Verbrennungsmotor vorhanden ist oder ein Vakuum von einem Verbrennungsmotor nur zeitweise zur Verfügung steht.

Die Erfindung betrifft auch Fahrzeuge mit Elektro-Antrieb oder Hybrid-Fahrzeug mit einem kombinierten Antrieb mittels eines Verbrennungsmotors und/oder eines Elektro-Antriebs, welche eine erfindungsgemäße Fahrzeugbremsanlage umfassen.

Weitere bevorzugte Ausführungsformen der Erfindung ergeben sich aus den Unteransprüchen und der nachfolgenden Beschreibung anhand von Figuren.

Es zeigen schematisch:
- Fig. 1: ein Schaltbild eines ersten Ausführungsbeispiels einer erfindungsgemäßen Fahrzeugbremsanlage mit hydraulisch und elektromechanisch betätigbaren Radbremsen,
- Fig. 2: ein Schaltbild eines zweiten Ausführungsbeispiels einer erfindungsgemäßen Fahrzeugbremsanlage mit hydraulisch und elektromechanisch betätigbaren Radbremsen und
- Fig. 3: ein Schaltbild eines dritten Ausführungsbeispiels einer erfindungsgemäßen Fahrzeugbremsanlage mit hydraulisch und elektromechanisch betätigbaren Radbremsen.

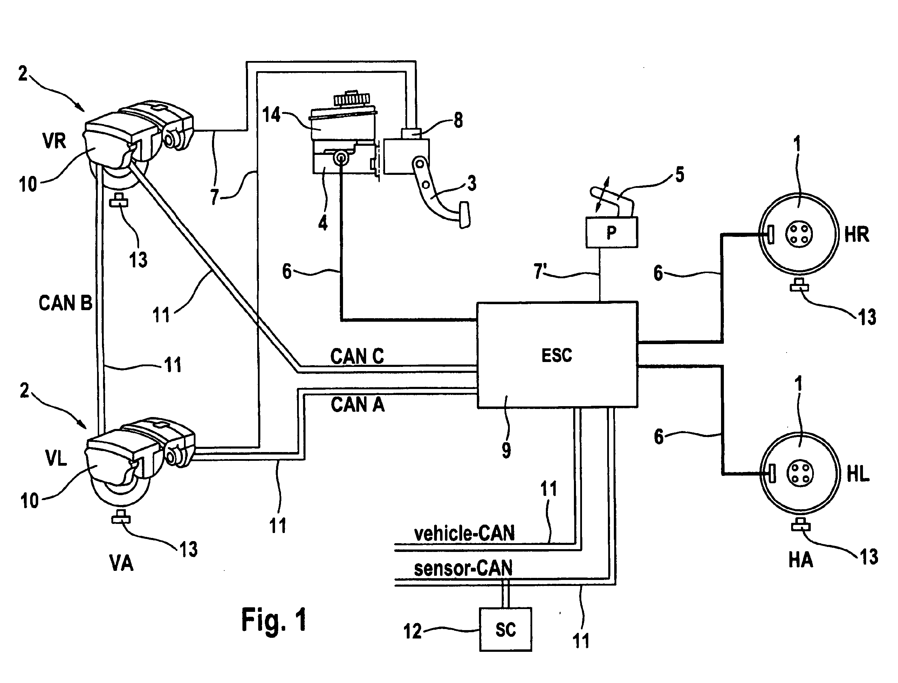

Fig. 1 zeigt schematisch ein Schaltbild eines ersten Ausführungsbeispiels einer erfindungsgemäßen Fahrzeugbremsanlage. Die beispielsgemäße Bremsanlage umfasst zwei elektromechanische Bremsaktuatoren 2 auf der Vorderachse VA (VR: vorne rechts, VL: vorne links), welche z.B. jeweils auf eine Scheibenbremse wirken, sowie jeweils eine hydraulische Radbremse 1 an jedem der Räder der Hinterachse HA (HR: hinten rechts, HL: hinten links). Die Hinterradbremsen 1 sind derart ausgelegt, dass Normalbremsungen durch die reguläre, über das Bremspedal 3 eingebrachte Fahrerfußkraft ohne zusätzliche "hydraulische" Verstärkung erfolgen können.

Die hydraulischen Radbremsen 1 sind beispielsgemäß als Trommelbremsen ausgeführt, welche über einen Single-Hauptbremszylinder 4 ohne jegliche Vakuumunterstützung mit Hydraulikdruck beaufschlagt werden.

Der hydraulische Bremsdruck für die hydraulisch betätigbaren Radbremsen 1 wird durch einen pedalbetätigten Single-Hauptbremszylinder 4 einkreisig für beide Hinterradbremsen 1 bereitgestellt. Beispielsgemäß führt nur eine hydraulische Bremsleitung 6 von dem Hauptbremszylinder 4 zu einem elektrohydraulischen Bremsensteuergerät 9, von welchem jeweils nur eine Bremsleitung 6 zu jeder der beiden Hinterradbremsen 1 führt.

Die elektromechanisch betätigbare Radbremsen 2 sind z.B. nach Maßgabe des in den hydraulisch betätigbaren Radbremsen 1 eingesteuerten hydraulischen Drucks betätigbar oder nach Maßgabe des vom Fahrer eingesteuerten hydraulischen Drucks (z.B. mit einem Vordrucksensor oder mit einem Kolbenwegsensor im Hauptzylinder 4 bestimmt) betätigbar. Auf Grundlage dieses Wertes werden die elektromechanisch betätigbaren Radbremsen 2 an der Vorderachse angesteuert, d.h. z.B. unter Berücksichtigung einer Bremskraftverteilungsfunktion zwischen Vorder- und Hinterachse wird eine Zuspannkraft der elektromechanisch betätigbaren Radbremsen 2 eingestellt. Außerdem können die elektromechanisch betätigbaren Radbremsen 2 nach Maßgabe des Betätigungsweges des Bremspedals 3, das bedeutet gemäß dem Wunsch des Fahrzeugführers, angesteuert werden. Dazu wird beispielsgemäß der Betätigungsweg des Bremspedals 3 mit Hilfe eines Pedalwegsensors 8 ermittelt. Das Signal wird beispielsgemäß über Leitungen 7 an die elektromechanisch betätigbaren Radbremsen 2 geleitet.

Die Ansteuerung der elektromechanisch betätigbaren Radbremsen 2 wird beispielsgemäß dezentral durch zwei elektronische Steuer- und Regeleinheiten 10 vorgenommen, die je einer elektromechanisch betätigbaren Radbremse 2 zugeordnet sind. Die elektromechanischen Bremsensteuergeräte 10 sind z.B. jeweils in die Radbremse 2 integriert.

Bei der elektrohydraulischen Steuer- und Regeleinheit 9 handelt es sich beispielsgemäß um ein Steuergerät für eine Fahrdynamikregelung (ESC-Steuergerät für zwei Radbremsen). Zur Ermittlung des eingesteuerten hydraulischen Drucks und zur Durchführung von Regelvorgängen ist beispielsgemäß mindestens ein Drucksensor vorgesehen. Das elektrohydraulische Bremsensteuergerät 9 kann selbsttätig (ohne Fahrervordruck) Hydraulikdruck an einer Radbremse 1 aufbauen und somit die Hinterräder HR, HL im Bedarfsfall abbremsen und/oder einen vorhandenen Fahrervordruck erhöhen, z.B. entsprechend einem bekannten ESC-Steuergerät für die Fahrdynamikregelung bei vier hydraulisch betätigbaren Radbremsen.

Ein sogenanntes Sensorcluster SC mit zumindest Gierratensensorik (Erfassung von Drehungen um die Hochachse des Fahrzeugs) und Querbeschleunigungssensorik, und ggf. Längsbeschleunigungssensorik, kann als separates Modul 12 (wie in Fig. 1 dargestellt) oder in der elektrohydraulischen Steuer- und Regeleinheit 9 (nicht dargestellt) untergebracht sein. Anhand der Sensorsignale des Sensorclusters SC kann eine Fahrdynamikregelung durchgeführt werden. Bei einer Normalbremsfunktion (ohne Schlupf- oder/und Fahrdynamikregelung) wird der vom Fahrerbremsfuß über das Bremspedal 3 generierte hydraulische Druck auf die beiden Hinterradbremsen 1 geführt.

Beispielsgemäß ist das elektrohydraulische Bremsensteuergerät 9 über einen Datenbus "sensor-CAN" an ein separates Sensorcluster-Modul 12 mit Gierraten- und Beschleunigungssensorik angeschlossen. Des Weiteren ist die elektrohydraulische Steuer- und Regeleinheit 9 über einen Datenbus "vehicle-CAN" mit anderen Fahrzeugsteuergeräten verbunden.

Gemäß dem ersten Ausführungsbeispiel verbinden jeweils ein serieller Datenbus 11 zur Kommunikation die beiden Steuer - und Regeleinheiten 10 untereinander (CAN B) sowie jede der elektronischen Steuer- und Regeleinheiten 10 mit der elektrohydraulischen Steuer- und Regeleinheit 9 (CAN A, CAN C). Es handelt sich um eine unmittelbar angeschlossene Ring-Busleitung. Somit ist das elektrohydraulische Bremsensteuergerät 9 über mehr als einen Kommunikationspfad mit jeder der elektromechanisch betätigbaren Radbremsen 2 verbunden. Z.B. ist das Bremsensteuergerät 9 über CAN A direkt und über CAN C, CAN B mittelbar mit der elektronischen Steuer - und Regeleinheiten 10 des linke Vorderrades VL verbunden. Dies sichert die redundante Datenübertragung.

Beispielsgemäß wird eine Parkbremsfunktionalität (Feststellbremsfunktion) durch die Vorderradbremsen 2 dargestellt. Hierzu weisen die elektromechanischen betätigbaren Radbremsen 2 eine Feststellbremsvorrichtung auf (nicht dargestellt), mit welcher die Radbremsen zur Durchführung einer Feststellbremsung im zugespannten Zustand verriegelbar sind. Die elektromechanischen Vorderradaktuatoren 2 dienen als Parkbremse, d.h. die Vorderradaktuatoren 2 können die Parkbremskraft stromlos einsperren.

Die hydraulischen Hinterradbremsen 1 weisen beispielsgemäß keine Parkbrems-/Feststellbremsfunktionalität auf.

Die Feststellbremsfunktion ist mit Hilfe eines Bedienelementes 5 ansteuerbar. Das Bedienelement 5 kann z.B. als Taster ausgebildet sein und weist drei Schaltstellungen für die Befehle "Spannen", "Neutral" und "Lösen" auf, wobei lediglich die mittlere Neutralstellung eine stabile Schaltstellung darstellt.

Wie in Fig. 1 dargestellt, wird das Signal des Parkbremsschalters 5 beispielsgemäß der elektrohydraulischen Steuer - und Regeleinheit 9 über eine Signalleitung 7' zugeführt. Eine Weitergabe der Information an die elektromechanischen Bremsen 2, welche die Parkbrems-/ Feststellbremsfunktion durchführen, ist dann über das Bussystem 11 möglich.

Alternativ kann das Signal des Parkbremsschalters 5 einem oder beiden elektromechanischen Bremsensteuergerät(en) 10 unmittelbar zugeführt werden (nicht dargestellt). So ist eine Feststellbremsung auch bei Ausfall der elektrohydraulischen Steuer- und Regeleinheit 9 möglich.

Zur Bestimmung des Bremswunsches des Fahrzeugführers umfasst die Bremsanlage gemäß dem oben beschriebenen ersten Ausführungsbeispiel einen Wegsensor 8 zur Bremspedalwegerfassung. Alternativ kann der Fahrerbremswunsch auch über einen Winkelsensor 8 zur Bremspedalwinkelerfassung bestimmt werden. Das Signal des Sensors 8 wird unmittelbar (z.B. über Signalleitungen direkt zu den elektromechanischen Radbremsen 2) oder mittelbar (z.B. über die elektrohydraulische Steuer- und Regeleinheit 9 und das Bussystem 11) den elektromechanischen Radbremsen 2 zur Verfügung gestellt. Eine unmittelbare Signalübertragung an die elektromechanischen Radbremsen 2 bietet den Vorteil, dass auch bei Ausfall des elektrohydraulischen Bremsensteuergeräts 9 der Fahrerbremswunsch an den elektromechanischen Radbremsen 2 vorliegt und eine Bremsung eingesteuert werden kann.

Über den Datenbus 11 werden also z.B. Informationen über die Ausgangssignale des Sensors 8 zur Fahrerbremswunscherfassung und/oder des Feststell-Bedienelementes 5 ausgetauscht.

Die Bremsanlage umfasst beispielsgemäß Raddrehzahlsensoren 13 an allen Rädern VL, HL, VR, HR. Jede der Vorderradbremsen 2 bekommt zumindest das Raddrehzahlsignal eines Vorderrad-Drehzahlsensors 13 unmittelbar zugeleitet. So sind eigenständige Bremsregelungen durch die elektronische Steuer - und Regeleinheit 10 der elektromechanisch betätigbaren Radbremsen 2 auch bei Ausfall des elektrohydraulischen Steuergeräts 9 möglich.

Alternativ werden die Signale der Raddrehzahlsensoren 13 der elektrohydraulischen Steuer- und Regeleinheit 9 zugeführt, und dann den elektromechanischen Bremsen 2 über das Bussystem 11 zur Verfügung gestellt.

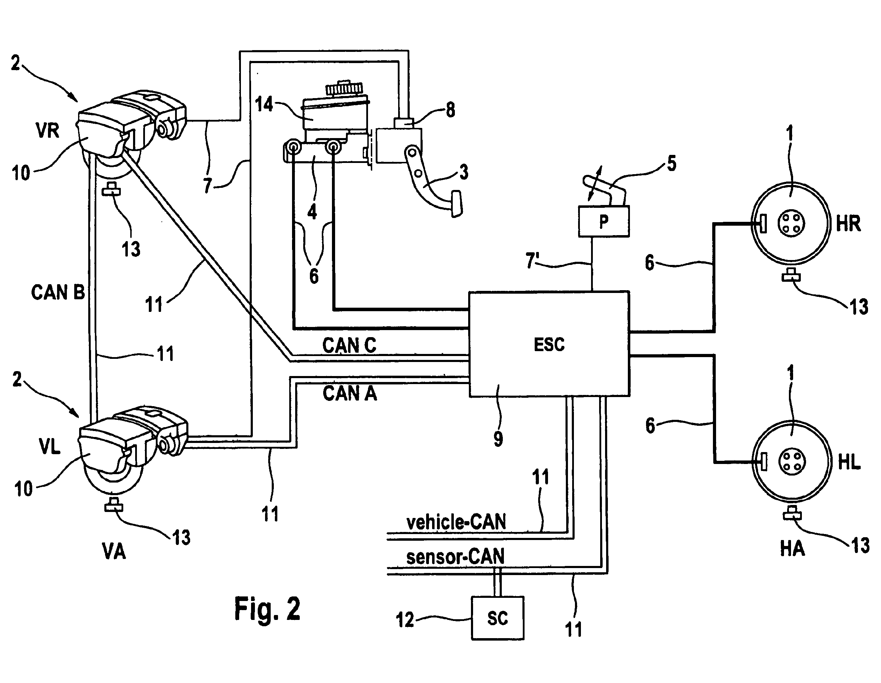

Fig. 2 zeigt schematisch ein zweites Ausführungsbeispiel einer erfindungsgemäßen Fahrzeugbremsanlage. Sich entsprechende Komponenten des ersten und zweiten Ausführungsbeispiels sind mit denselben Bezugszeichen bezeichnet. Im Unterschied zum ersten Ausführungsbeispiel umfasst die Fahrzeugbremsanlage gemäß zweitem Ausführungsbeispiel einen Tandem-Hauptbremszylinder 4 und zwei hydraulische Bremsleitungen 6 zur elektrohydraulischen Steuer- und Regeleinheit 9, die Anlage ist also zweikreisig ausgeführt. Wie im ersten Ausführungsbeispiel ist die elektrohydraulische Steuer - und Regeleinheit 9 als ein Steuergerät für die Fahrdynamikregelung (ESC-Steuergerät) ausgeführt, welches einen autonomen Druckaufbau an der Hinterachse HA durchführen kann, und über zwei Bremsleitungen 6 mit den Hinterradbremsen 1 verbunden.

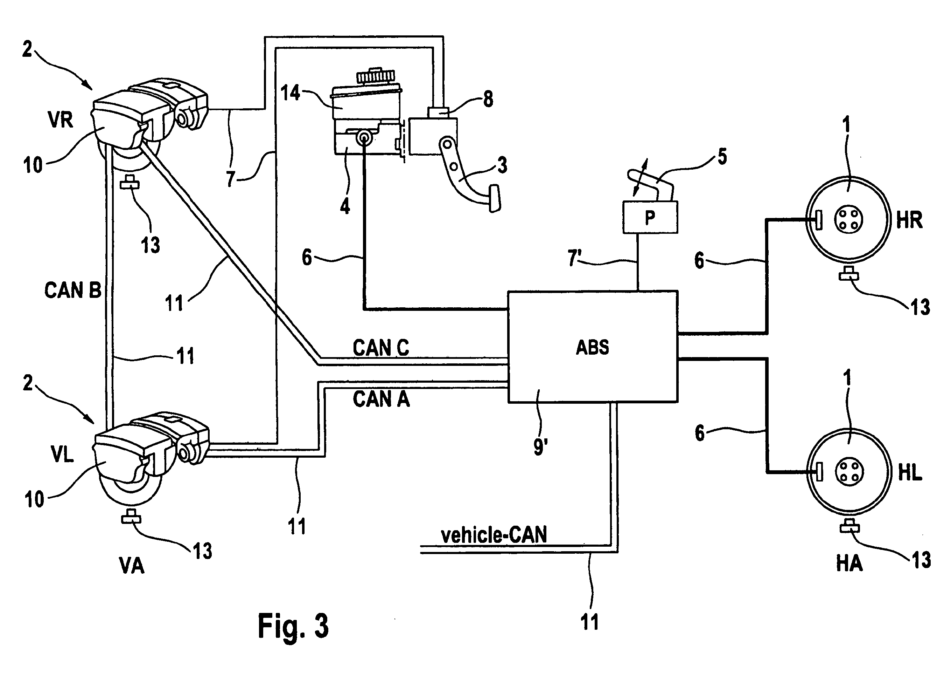

Fig. 3 zeigt schematisch ein drittes Ausführungsbeispiel einer erfindungsgemäßen Fahrzeugbremsanlage. Sich entsprechende Komponenten des ersten und dritten Ausführungsbeispiels sind mit denselben Bezugszeichen bezeichnet. Es handelt sich um eine Bremsanlage mit einkreisigem hydraulischen Hinterachsbremssystem und elektromechanisch betätigbaren Radbremsen 2 an der Vorderachse. Die hydraulisch betätigbaren Hinterachs-Radbremsen 1 werden mit Hilfe des pedalbetätigten Hauptzylinders 4 mit hydraulischem Druckmittel beaufschlagt. Zu diesem Zweck sind die hydraulisch betätigbaren Radbremsen 1 unter Zwischenschaltung von Einlassventilen (Teil der elektrohydraulischen Steuer- und Regeleinheit 9') über eine Hydraulikleitung 6 mit dem Hauptzylinder 4 verbunden. Bei einem Druckabbau wird das eingesteuerte Druckmittel über Auslassventile (ebenfalls Teile des elektrohydraulischen Steuer- und Regeleinheit 9') in einen drucklosen Druckmittelvorratsbehälter 14 abgelassen. Zur Ermittlung des eingesteuerten hydraulischen Drucks und zur Durchführung von Regelvorgängen, wie etwa Blockierschutzregelungen, ist beispielsgemäß mindestens ein Drucksensor vorgesehen.

In dieser kostengünstigen Variante ist die elektrohydraulische Steuer- und Regeleinheit 9' als ein ABS-Steuergerät (ABS: Anti-Blockier-System) mit zwei hydraulischen Einlassventilen und zwei hydraulischen Auslassventilen für die Hinterräder HR, HL, jeweils ein Einlass-/ Auslassventil pro Rad, ausgeführt.

Das ABS-Steuergerät 9' kann im Zusammenspiel mit den elektromechanischen Vorderradbremsen 2 alle wesentlichen Bremsfunktionalitäten von heutigen High-End-Bremsensteuergeräten umsetzen. Nur ein autarker Druckaufbau an den Hinterrädern HR, HL ist hiermit nicht möglich, was jedoch in der Praxis eine eher geringe Rolle spielt.

In den oben beschriebenen Ausführungsbeispielen umfasst der Hauptbremszylinder 4 vorteilhafterweise mindestens einen Druck- oder Wegsensor, um einen Hydraulikdruck oder einen Weg eines Kolbens zu ermitteln. Diese Information wird unmittelbar (z.B. über eine Signalleitung direkt zur elektrohydraulischen Steuer- und Regeleinheit 9) oder mittelbar (z.B. über mindestens eine Signalleitung zu mindestens einer elektromechanischen Radbremse 2 und über das Bussystem 11 zur elektrohydraulischen Steuer- und Regeleinheit 9, 9') zumindest der elektrohydraulischen Steuer- und Regeleinheit 9, 9' zur Verfügung gestellt, um z.B. zur Schlupfregelung zur Verfügung zu stehen. Zusätzlich kann diese Information auch an mindestens eine, insbesondere alle, elektromechanischen Radbremsen 2 mittelbar oder unmittelbar weitergeleitet werden werden.

Gemäß eines weiteren Ausführungsbeispiels der Erfindung wird den elektromechanischen Vorderradbremsen 2 mindestens ein Signal, welches ein Maß für den in den hydraulisch betätigbaren Radbremsen 1 eingesteuerten hydraulischen Druck (z.B. mit einem Drucksensor in der elektrohydraulischen Steuer- und Regeleinheit 9, 9' bestimmt) oder ein Maß für den vom Fahrer eingesteuerten hydraulischen Druck (z.B. mit einem Vordrucksensor oder mit einem Kolbenwegsensor im Hauptzylinder 4 bestimmt) oder ein Maß für den Betätigungsweg/-winkel des Bremspedals 3 darstellt, zugeleitet. Vorteilhafterweise wird dieses Signal den Vorderradbremsen 2 unmittelbar zugeleitet (z.B. über eine Signalleitung 7), so dass die elektronischen Steuer- und Regeleinheiten 10 auch bei einem Kommunikationsverlust zur elektrohydraulischen Steuer- und Regeleinheit 9, 9' anhand der zur Verfügung gestellten Signale eigenständig Bremsungen ausführen können.

Bei einem Ausfall einer der elektromechanischen Vorderradbremsen 2 wirkt beispielsgemäß die zweite elektromechanische Vorderradbremse 2 noch beim Bremsprozess (Normalbremse und/oder Parkbremse) mit.

Beispielsgemäß ist die elektrohydraulische Regel- und Steuereinheit 9, 9' im hinteren Teil des Fahrzeugs montiert. Hierdurch wird die Länge der hydraulischen Leitungen 6 reduziert.

Der Bremsflüssigkeitsvorratsbehälter 14 für das elektrohydraulische Steuer- und Regelgerät 9, 9' ist vorteilhafterweise ebenfalls im hinteren Teil des Fahrzeugs angebracht. So kann zusätzlich Bauraum im vorderen Teil des Fahrzeugs eingespart werden.

Die elektrohydraulische Steuer- und Regeleinheit 9 kann mittelbar oder unmittelbar mindestens eine Fahrzeugbremsleuchte ansteuern.

Eine erfindungsgemäße Bremsanlage wird z.B. in einem Elektrofahrzeug verwendet, da in diesem prinzipiell kein Vakuum für eine Bremskraftverstärkung von einem Verbrennungsmotor vorhanden ist.

Eine erfindungsgemäße Bremsanlage kann aber auch als Bremsanlage für ein Hybridfahrzeug (Elektro- und Verbrennungsmotor-Antrieb) eingesetzt werden, da in diesem ein Vakuum von einem Verbrennungsmotor nur zeitweise zur Verfügung steht, nämlich wenn der Verbrennungsmotor läuft.

Allerdings ist eine erfindungsgemäße Bremsanlage auch für Fahrzeuge mit mindestens einem Verbrennungsmotor für Antriebszwecke geeignet.

## Patentansprüche

1. Kombinierte Fahrzeugbremsanlage, insbesondere für Kraftfahrzeuge, mit einer elektromechanischen Betriebsbremsanlage für eine erste Achse des Fahrzeugs, welche mindestens eine elektromechanisch betätigbare Radbremse (2) aufweist, und mit einer hydraulischen Betriebsbremsanlage für eine zweite Achse des Fahrzeugs, welche einen Hauptbremszylinder (4) und mindestens eine hydraulisch betätigbare Radbremse (1) aufweist, **dadurch gekennzeichnet, dass** die erste Achse eine Vorderachse (VA) und die zweite Achse eine Hinterachse (HA) ist.

2. Kombinierte Fahrzeugbremsanlage nach Anspruch 1, **dadurch gekennzeichnet, dass** die hydraulisch betätigbare(n) Radbremse(n) (1) der Hinterachse (HA) als selbstverstärkende Bremse(n), insbesondere als Trommelbremse(n), und die elektromechanisch betätigbare(n) Radbremse(n) (2) der Vorderachse (VA) als Scheibenbremse(n) ausgeführt ist/sind.

3. Kombinierte Fahrzeugbremsanlage nach Anspruch 1, **dadurch gekennzeichnet, dass** die hydraulisch betätigbare(n) Radbremse(n) (1) der Hinterachse (HA) als ein - oder mehrscheibige Scheibenbremse(n), insbesondere mit einem großen Wirkradius, und die elektromechanisch betätigbare(n) Radbremse(n) (2) der Vorderachse (VA) als Scheibenbremse(n) ausgeführt ist/sind, wobei insbesondere der Wirkradius der Scheibenbremse(n) der Hinterachse (HA) größer ist als der Wirkradius der Scheibenbremse(n) der Vorderachse (VA).

4. Kombinierte Fahrzeugbremsanlage nach mindestens einem der Ansprüche 1 bis 3, **dadurch gekennzeichnet, dass** diese eine von einem Fahrzeugführer betätigbare Bremsbetätigungseinrichtung (3) aufweist, welche dem Hauptbremszylinder (4) der hydraulischen Betriebsbremsanlage direkt, insbesondere ohne einen zwischengeschalteten Bremskraftverstärker, vorgeschaltet ist.

5. Kombinierte Fahrzeugbremsanlage nach mindestens einem der Ansprüche 1 bis 4, **dadurch gekennzeichnet, dass** diese eine der Hinterachse (HA) zugeordnete elektrohydraulische Steuer- und Regeleinheit (9, 9'), insbesondere zur Schlupf- und/oder Fahrdynamikregelung, umfasst, welche eine Steuerung der Bremskraft der hydraulisch betätigbaren Radbremse(n) (1) mittels einer Radbremsdruckregelventilanordnung durchführen kann und insbesondere auch Vorgaben zur Steuerung der Bremskraft der elektromechanisch betätigbaren Radbremse(n) (2) an die elektromechanisch betätigbaren Radbremse(n) (2) weiterleiten kann.

6. Kombinierte Fahrzeugbremsanlage nach Anspruch 5, **dadurch gekennzeichnet, dass** die elektrohydraulische Steuer- und Regeleinheit (9, 9') derart ausgeführt ist, dass sie ohne eine Betätigung der Bremsbetätigungseinrichtung (3) durch den Fahrzeugführer die hydraulisch betätigbare(n) Radbremse(n) (1) mit einem hydraulischen Druck beaufschlagen kann oder dass sie einen vom Fahrzeugführer eingesteuerten hydraulischen Druck erhöhen kann.

7. Kombinierte Fahrzeugbremsanlage nach Anspruch 5 oder 6, **dadurch gekennzeichnet, dass** die elektrohydraulische Steuer- und Regeleinheit (9, 9'), und insbesondere ein Bremsflüssigkeitsbehälter (14) für die elektrohydraulische Steuer- und Regeleinheit (9, 9'), im hinteren Teil des Fahrzeugs angeordnet ist/sind.

8. Kombinierte Fahrzeugbremsanlage nach mindestens einem der Ansprüche 1 bis 7, **dadurch gekennzeichnet, dass** die hydraulische Betriebsbremsanlage zwei hydraulisch betätigbare Radbremse (HL, HR) aufweist und als eine Einkreis-Bremsanlage mit einem Einkreis-Hauptbremszylinder (4) ausgeführt ist, wobei insbesondere die elektrohydraulische Steuer- und Regeleinheit (9) über eine einzige hydraulische Bremsleitung (6) mit dem Einkreis-Hauptbremszylinder (4) verbunden ist und von der elektrohydraulische Steuer- und Regeleinheit (9) jeweils eine einzige hydraulische Bremsleitung (6) zu jeder der beiden Radbremsen (HL, HR) führt.

9. Kombinierte Fahrzeugbremsanlage nach mindestens einem der Ansprüche 1 bis 7, **dadurch gekennzeichnet, dass** die hydraulische Betriebsbremsanlage zwei hydraulisch betätigbare Radbremse (HL, HR) aufweist und als eine Zweikreis-Bremsanlage mit einem Tandemhauptbremszylinder (4) ausgeführt ist, wobei insbesondere die elektrohydraulische Steuer- und Regeleinheit (9) über zwei hydraulische Bremsleitungen (6) mit dem Tandemhauptbremszylinder (4) verbunden ist und von der elektrohydraulische Steuer- und Regeleinheit (9, 9') jeweils eine einzige hydraulische Bremsleitung (6) zu jeder der beiden Radbremsen (HL, HR) führt.

10. Kombinierte Fahrzeugbremsanlage nach mindestens einem der Ansprüche 5 bis 9, **dadurch gekennzeichnet, dass** der/den elektromechanisch betätigbaren Radbremse(n) (2) der Vorderachse (VA) jeweils eine elektronische Steuer- und Regeleinheit (10) zugeordnet ist, insbesondere in die Radbremse(n) (2) integriert ist, und dass jede elektronische Steuer- und Regeleinheit (10) über mehr als einen Kommunikationsbus (11, 11', 11") mittelbar oder unmittelbar mit der der Hinterachse (HA) zugeordneten elektrohydraulischen Steuer- und Regeleinheit (9, 9') verbunden ist.

11. Kombinierte Fahrzeugbremsanlage nach mindestens einem der Ansprüche 1 bis 10, **dadurch gekennzeichnet, dass** mindestens eine, insbesondere alle, elektromechanisch betätigbare Radbremse (2) der Vorderachse (VA) eine Feststellbremsvorrichtung umfasst, welche mittels eines Parkbrems-Bedienelementes (5) ansteuerbar ist, und dass die hydraulisch betätigbare(n) Radbremse(n) (1) der Hinterachse (HA) keine Feststellbremsvorrichtung oder Feststellbremsfunktion umfasst/umfassen.

12. Kombinierte Fahrzeugbremsanlage nach Anspruch 11, **dadurch gekennzeichnet, dass** das Parkbrems-Bedienelement (5) unmittelbar an eine elektronische Steuer- und Regeleinheit (9, 9', 10), insbesondere an die elektrohydraulische Steuer- und Regeleinheit (9, 9'), angeschlossen ist.

13. Kombinierte Fahrzeugbremsanlage nach mindestens einem der Ansprüche 10 bis 12, **dadurch gekennzeichnet, dass** die elektronische Steuer- und Regeleinheit (10) jeder elektromechanisch betätigbaren Radbremse (2) mit zumindest einem an einem Vorderrad (VR, VL) angeordneten Raddrehzahlsensor (13), insbesondere mit dem an dem zugehörigen Vorderrad angeordneten Raddrehzahlsensor, unmittelbar verbunden ist.

14. Kombinierte Fahrzeugbremsanlage nach mindestens einem der Ansprüche 10 bis 13, **dadurch gekennzeichnet, dass** der elektronischen Steuer- und Regeleinheit (10) jeder elektromechanisch betätigbaren Radbremse (2) über einen weiteren Weg als der unmittelbaren Kommunikationsbus-Verbindung mit der elektrohydraulischen Steuer - und Regeleinheit (9, 9') mindestens eine Information eines Sensors, welche einen Fahrerbremswunsch wiedergibt, zugeführt wird.

15. Fahrzeug mit Elektro-Antrieb oder Hybrid-Fahrzeug, **gekennzeichnet durch** eine kombinierte Fahrzeugbremsanlage gemäß mindestens einem der Ansprüche 1 bis 14.

## Claims

1. Combined vehicle brake system, in particular for motor vehicles, comprising an electromechanical service brake system for a first axle of the vehicle, which electromechanical service brake system comprises at least one electromechanically actuatable wheel brake (2), and comprising a hydraulic service brake system for a second axle of the vehicle, which hydraulic service brake system comprises a brake master cylinder (4) and at least one hydraulically actuatable wheel brake (1), **characterized in that** the first axle is a front axle (VA) and the second axle is a rear axle (HA).

2. Combined vehicle brake system according to Claim 1, **characterized in that** the hydraulically actuatable wheel brake(s) (1) of the rear axle (HA) is/are in the form of self-energizing brake(s), in particular drum brake(s), and the electromechanically actuatable wheel brake(s) (2) of the front axle (VA) is/are in the form of disk brake(s).

3. Combined vehicle brake system according to Claim 1, **characterized in that** the hydraulically actuatable wheel brake(s) (1) of the rear axle (HA) is/are in the form of single-disk or multi-disk disk brake(s), in particular with a large effective radius, and the electromechanically actuatable wheel brake(s) (2) of the front axle (VA) is/are in the form of disk brake(s), the effective radius of the disk brake(s) of the rear axle (HA) being, in particular, larger than the effective radius of the disk brake(s) of the front axle (VA).

4. Combined vehicle brake system according to at least one of Claims 1 to 3, **characterized in that** said combined vehicle brake system includes a brake actuating device (3) which can be actuated by the vehicle driver and which is connected directly, in particular without an interposed brake booster, upstream of the brake master cylinder (4) of the hydraulic service brake system.

5. Combined vehicle brake system according to at least one of Claims 1 to 4, **characterized in that** said combined vehicle brake system includes an electrohydraulic control and regulation unit (9, 9') associated with the rear axle (HA), in particular for slip control and/or electronic stability control, which electrohydraulic control and regulation unit (9, 9') can execute control of the braking force of the hydraulically actuatable wheel brake(s) (1) by means of a wheel brake pressure control valve arrangement and, in particular, can also transmit command data for controlling the braking force of the electromechanically actuatable wheel brake(s) (2) to the electromechanically actuatable wheel brake(s) (2).

6. Combined vehicle brake system according to Claim 5, **characterized in that** the electrohydraulic control and regulation unit (9, 9') is configured in such a manner that it can subject the hydraulically actuatable wheel brake(s) (1) to a hydraulic pressure without actuation of the brake actuating device (3) by the vehicle driver, or that said electrohydraulic control and regulation unit (9, 9') can increase a hydraulic pressure induced by the vehicle driver.

7. Combined vehicle brake system according to Claim 5 or 6, **characterized in that** the electrohydraulic control and regulation unit (9, 9'), and in particular a brake fluid reservoir (14) for the electrohydraulic control and regulation unit (9, 9'), is/are arranged in the rear part of the vehicle.

8. Combined vehicle brake system according to at least one of Claims 1 to 7, **characterized in that** the hydraulic service brake system comprises two hydraulically actuatable wheel brakes (HL, HR) and is in the form of a single-circuit brake system with a single-circuit brake master cylinder (4), the electrohydraulic control and regulation unit (9) being connected, in particular, to the single-circuit brake master cylinder (4) via a single hydraulic brake line (6), and a respective single hydraulic brake line (6) leading from the electrohydraulic control and regulation unit (9) to each of the two wheel brakes (HL, HR).

9. Combined vehicle brake system according to at least one of Claims 1 to 7, **characterized in that** the hydraulic service brake system comprises two hydraulically actuatable wheel brakes (HL, HR) and is in the form of a dual-circuit brake system with a tandem brake master cylinder (4), the electrohydraulic control and regulation unit (9) being connected, in particular, via two hydraulic brake lines (6) to the tandem brake master cylinder (4) and a respective single hydraulic brake line (6) leading from the electrohydraulic control and regulation unit (9, 9') to each of the two wheel brakes (HL, HR).

10. Combined vehicle brake system according to at least one of Claims 5 to 9, **characterized in that** a respective electronic control and regulation unit (10) is associated with the electromechanically actuatable wheel brake(s) (2) of the front axle (VA), and in particular is integrated in the wheel brake(s) (2), and **in that** each electronic control and regulation unit (10) is connected via more than one communication bus (11, 11', 11") indirectly or directly to the electrohydraulic control and regulation unit (9, 9') associated with the rear axle (HA).

11. Combined vehicle brake system according to at least one of Claims 1 to 10, **characterized in that** at least one, in particular all, electromechanically actuatable wheel brake(s) (2) of the front axle (VA) include(s) a parking brake device which can be activated by means of a parking brake operating element (5), and **in that** the hydraulically actuatable wheel brake(s) (1) of the rear axle (HA) does/do not include a parking brake device or a parking brake function.

12. Combined vehicle brake system according to Claim 11, **characterized in that** the parking brake operating element (5) is connected directly to an electronic control and regulation unit (9, 9', 10), in particular to the electrohydraulic control and regulation unit (9, 9').

13. Combined vehicle brake system according to at least one of Claims 10 to 12, **characterized in that** the electronic control and regulation unit (10) of each electromechanically actuatable wheel brake (2) is directly connected to at least one wheel rotational speed sensor (13) arranged on a front wheel (VR, VL), in particular to the wheel rotational speed sensor arranged on the associated front wheel.

14. Combined vehicle brake system according to at least one of Claims 10 to 13, **characterized in that** at least information of a sensor which reproduces a driver's braking request is supplied to the electronic control and regulation unit (10) of each electromechanically actuatable wheel brake (2) via a further path other than the direct communication-bus connection to the electrohydraulic control and regulation unit (9, 9').

15. Vehicle with electric drive or a hybrid vehicle, **characterized by** a combined vehicle brake system according to at least one of Claims 1 to 14.

## Revendications

1. Système de freinage combiné d'un véhicule, notamment pour véhicules automobiles, avec un système de freinage à fonctionnement électromécanique conçu pour un premier essieu du véhicule et comportant au moins un frein de roue (2) actionnable de façon électromécanique et avec un système de freinage à fonctionnement hydraulique conçu pour un deuxième essieu du véhicule et comportant un cylindre de frein principal (4) et au moins un frein de roue (1) actionnable de façon hydraulique, **caractérisé en ce que** le premier essieu est un essieu avant (VA) et le deuxième essieu est un essieu arrière (HA).

2. Système de freinage combiné d'un véhicule selon la revendication 1, **caractérisé en ce que** le ou les freins de roue (1) actionnables de façon hydraulique de l'essieu arrière (HA) prennent la forme de freins autorenforcés, notamment de freins à tambour, et que le ou les freins de roue (2) actionnables de façon électromécanique de l'essieu avant (VA) prennent la forme de freins à disque.

3. Système de freinage combiné d'un véhicule selon la revendication 1, **caractérisé en ce que** le ou les freins de roue (1) actionnables de façon hydraulique de l'essieu arrière (HA) prennent la forme d'un ou de plusieurs freins à disque dotés d'un ou de plusieurs disques, notamment avec un grand rayon d'action et que le ou les freins de roue (2) actionnables de façon électromécanique de l'essieu avant (VA) prennent la forme de freins à disque, le rayon d'action du ou des freins à disque de l'essieu arrière (HA) étant notamment supérieur au rayon d'action des freins à disque de l'essieu avant (VA).

4. Système de freinage combiné d'un véhicule selon au moins l'une quelconque des revendications 1 à 3, **caractérisé en ce que** celui-ci comprend un dispositif d'actionnement de frein (3) pouvant être actionné par un conducteur du véhicule et directement connecté en amont du cylindre de frein principal (4) du système de freinage à fonctionnement hydraulique, notamment sans amplificateur de force de freinage interconnecté.

5. Système de freinage combiné d'un véhicule selon au moins l'une quelconque des revendications 1 à 4, **caractérisé en ce que** celui-ci comprend une unité de commande et de réglage (9, 9') électrohydraulique associée à l'essieu arrière (HA), notamment pour effectuer le réglage de la dynamique de patinage et/ou de conduite et pouvant exécuter une commande de la force de freinage du ou des freins de roue (1) actionnables de façon hydraulique à l'aide d'un agencement de soupape de régulation de pression de frein de roue et notamment également transmettre des instructions servant à commander la force de freinage du ou des freins de roue (2) actionnables de façon électromécanique au niveau du ou des freins de roue (2) actionnables de façon électromécanique.

6. Système de freinage combiné d'un véhicule selon la revendication 5, **caractérisé en ce que** l'unité de commande et de réglage (9, 9') électrohydraulique est réalisée de telle sorte qu'elle peut alimenter en pression hydraulique le ou les freins de roue (1) actionnables de façon hydraulique que le conducteur du véhicule n'actionne le dispositif d'actionnement de frein (3) ou qu'elle peut augmenter une pression hydraulique demandée par le conducteur du véhicule.

7. Système de freinage combiné d'un véhicule selon la revendication 5 ou 6, **caractérisé en ce que** l'unité de commande et de réglage (9, 9') électrohydraulique, et notamment un réservoir de liquide de frein (14) prévu pour l'unité de commande et de réglage (9, 9') électrohydraulique, sont disposés dans la partie arrière du véhicule.

8. Système de freinage combiné d'un véhicule selon au moins l'une quelconque des revendications 1 à 7, **caractérisé en ce que** le système de freinage à fonctionnement hydraulique comporte deux freins de roue (HL, HR) actionnables de façon hydraulique et est réalisé sous la forme d'un système de freinage à un circuit équipé d'un cylindre de frein principal (4) à un circuit, l'unité de commande et de réglage (9) électrohydraulique étant notamment reliée au cylindre de frein principal (4) à un circuit par le biais d'une conduite de frein hydraulique (6) unique et une conduite de frein hydraulique (6) unique étant respectivement amenée par l'unité de commande et de réglage (9) électrohydraulique à chacun des deux freins de roue (HL, HR).

9. Système de freinage combiné d'un véhicule selon au moins l'une quelconque des revendications 1 à 7, **caractérisé en ce que** le système de freinage à fonctionnement hydraulique comporte deux freins de roue (HL, HR) actionnables de façon hydraulique et est réalisé sous la forme d'un système de freinage à deux circuits équipé d'un cylindre de frein principal (4) tandem, l'unité de commande et de réglage (9) électrohydraulique étant notamment reliée au cylindre de frein principal (4) tandem par le biais de deux conduites de frein hydrauliques (6) et une conduite de frein hydraulique (6) unique étant respectivement amenée par l'unité de commande et de réglage (9, 9') électrohydraulique à chacun des deux freins de roue (HL, HR).

10. Système de freinage combiné d'un véhicule selon au moins l'une quelconque des revendications 5 à 9, **caractérisé en ce qu'**une unité de commande et de réglage (10) électronique est respectivement associée au ou aux freins de roue (2) actionnables de façon électromécanique de l'essieu avant (VA) et est notamment intégré dans le ou les freins de roue (2) et que chaque unité de commande et de réglage (10) électronique est reliée directement ou indirectement à l'unité de commande et de réglage (9, 9') électrohydraulique associée à l'essieu arrière (HA) par le biais de plus d'un bus de communication (11, 11', 11").

11. Système de freinage combiné d'un véhicule selon au moins l'une quelconque des revendications 1 à 10, **caractérisé en ce qu'**au moins un, notamment tous les freins de roue (2) actionnables de façon électromécanique, de l'essieu avant (VA) comprennent un dispositif de frein de stationnement pouvant être commandé par le biais d'un élément de commande de frein à main (5) et que le ou les freins de roue (1) actionnables de façon hydraulique de l'essieu arrière (HA) ne comportent aucun dispositif de frein de stationnement ou aucune fonction de frein de stationnement.

12. Système de freinage combiné d'un véhicule selon la revendication 11, **caractérisé en ce que** l'élément de commande de frein à main (5) est directement raccordé à une unité de commande et de réglage (9, 9', 10) électronique, notamment à l'unité de commande et de réglage (9, 9') électrohydraulique.

13. Système de freinage combiné d'un véhicule selon au moins l'une quelconque des revendications 10 à 12, **caractérisé en ce que** l'unité de commande et de réglage (10) électronique de chaque frein de roue (2) actionnable de façon électromécanique est directement relié à au moins un capteur de vitesse de rotation de roue (13) disposé au niveau d'une roue avant (VR, VL), notamment au capteur de vitesse de rotation de roue disposé au niveau de la roue avant associée.

14. Système de freinage combiné d'un véhicule selon au moins l'une quelconque des revendications 10 à 13, **caractérisé en ce qu'**au moins une information d'un capteur transmettant un souhait de freinage du conducteur est amenée à l'unité de commande et de réglage (10) électronique de chaque frein de roue (2) actionnable de façon électromécanique par le biais d'une voie supplémentaire autre que la liaison par bus de communication directe avec l'unité de commande et de réglage (9, 9') électrohydraulique.

15. Véhicule équipé d'un entraînement électrique ou véhicule hybride, **caractérisé par** la présence d'un système de freinage combiné d'un véhicule selon au moins l'une quelconque des revendications 1 à 14.
